(19) Europäisches Patentamt
European Patent Office
Office européen des brevets

(11) **EP 4 542 602 A2**

(12) **EUROPEAN PATENT APPLICATION**

(43) Date of publication:
**23.04.2025 Bulletin 2025/17**

(21) Application number: **24200006.5**

(22) Date of filing: **12.09.2024**

(51) International Patent Classification (IPC):
*H01G 4/30* (2006.01)　　*H01G 4/232* (2006.01)
*H01G 4/224* (2006.01)　　*H01G 4/12* (2006.01)
*H01G 4/008* (2006.01)　　*H01G 4/012* (2006.01)

(52) Cooperative Patent Classification (CPC):
**H01G 4/30; H01G 4/012; H01G 4/224;**
H01G 4/0085; H01G 4/1209; H01G 4/1227;
H01G 4/232

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.10.2023 KR 20230140707**

(71) Applicant: **Samsung Electro-Mechanics Co., Ltd. Gyeonggi-do (KR)**

(72) Inventor: **Lee, Geon Young**
**Suwon-si, Gyeonggi-do (KR)**

(74) Representative: **Grünecker Patent- und Rechtsanwälte**
**PartG mbB**
**Leopoldstraße 4**
**80802 München (DE)**

(54) **MULTILAYER ELECTRONIC CERAMIC COMPONENT HAVING THE FIRST INTERNAL ELECTRODE LONGER THAN THE OTHERS**

(57)　　A multilayer electronic component (100) comprising:

a body (110) including a dielectric layer (111) and first and second internal electrodes (121, 122) alternately disposed in a first direction (T) while having the dielectric layer (111) interposed therebetween; and

first and second external electrodes (130, 140) disposed on opposite surfaces of the body (110) in a second direction (L) perpendicular to the first direction (T),

wherein the body (110) includes:

a main portion (M) in which the first and second internal electrodes (121, 122) are alternately disposed in the first direction (T),

a first cover portion (C1) disposed on a first surface (1) of the main portion (M) in the first direction (T), and

a second cover portion (C2) disposed on a second surface (2) of the main portion (M) in the first direction (T),

the first (1) and second (2) surfaces oppose each other in the first direction (T),

the first cover portion (C1) includes a first cover electrode (121'), a size of the first cover electrode (121') in the second direction (L) is larger than an average size of the first or second internal electrode (121, 122) in the second direction (L), and

the first cover electrode (121') is closer to the first surface (1) of the main portion (M) than to the surfaces of the body (110) that oppose each other in the first direction (T).

Further, the first cover portion (C1) includes one or more first additional cover electrodes (121', 122') disposed further away from a center of the body (110) in the first direction (T) than the first cover electrode (121').

FIG. 2

FIG. 12

**Description**

**CROSS-REFERENCE TO RELATED APPLICATION(S)**

This application claims benefit of priority to Korean Patent Application No. 10-2023-0140707 filed on October 19, 2023 in the Korean Intellectual Property Office, the disclosure of which is incorporated herein by reference in its entirety.

**TECHNICAL FIELD**

The present disclosure relates to a multilayer electronic component.

A multilayer ceramic capacitor (MLCC), a multilayer electronic component, may be a chip-type condenser mounted on a printed circuit board of various electronic products or automobile products such as an imaging device, including a liquid crystal display (LCD) or a plasma display panel (PDP), a computer, a smartphone or a mobile phone, an on-board charger (OBC) of an electric vehicle, a circuit such as a direct-current to direct-current (DC-DC) converter, or an infotainment system, to serve to charge or discharge electricity therein or therefrom.

It is important for the MLCC important to have a low equivalent series inductance (ESL) to be operated smoothly in a high frequency region of a resonance frequency or higher. An attempt is being made to connect the MLCCs in parallel to each other to lower the ESL of the MLCC, which may lead to a larger mounting area and an increased production time.

Therefore, there is a need for a structural improvement for lowering the ESL of the multilayer electronic component such as the MLCC.

**SUMMARY**

An aspect of the present disclosure is to provide a multilayer electronic component having a minimum equivalent series inductance (ESL) based on a structure thereof.

However, the present disclosure is not limited to the description above, and may be more readily understood in the description of exemplary embodiments of the present disclosure.

According to an aspect of the present disclosure, a multilayer electronic component includes: a body including a dielectric layer and first and second internal electrodes alternately disposed in a first direction while having the dielectric layer interposed therebetween; and first and second external electrodes disposed on opposite surfaces of the body in a second direction perpendicular to the first direction, wherein the body includes a main portion in which the first and second internal electrodes are alternately disposed in the first direction, a first cover portion disposed on a first surface of the main portion in the first direction, and a second cover portion disposed on a second surface of the main portion in the first direction, the first and second surfaces oppose each other in the first direction, one of the first and second cover portions includes a cover electrode, a size of the cover electrode in the second direction is larger than an average size of the first or second internal electrode in the second direction, and the cover electrode is closer to the first surface or the second surface of the main portion than to the surfaces of the body that oppose each other in the first direction.

According to another aspect of the present disclosure, a multilayer electronic component includes: a body including a dielectric layer and first and second internal electrodes alternately disposed while having a dielectric layer interposed therebetween in a first direction; a first external electrode disposed on one surface of both surfaces of the body that oppose each other in a second direction perpendicular to the first direction, the first external electrode is connected to the first internal electrode; and a second external electrode disposed on the other surface of the both surfaces of the body that oppose each other in the second direction, the second external electrode is connected to the second internal electrode, wherein the body includes a main portion in which the first and second internal electrodes are alternately disposed in the first direction, a first cover portion disposed on a first surface of the main portion in the first direction, and a second cover portion disposed on a second surface of the main portion in the first direction, the first and second surfaces oppose each other in the first direction, the first cover portion includes a first cover electrode, a size of the first cover electrode in the second direction is larger than an average size of the first or second internal electrode in the second direction, and the second cover portion includes a second cover electrode, a size of the second cover electrode in the second direction is larger than the average size of the first or second internal electrode in the second direction.

BRIEF DESCRIPTION OF DRAWINGS

The above and other aspects, features and advantages of the present disclosure will be more clearly understood from the following detailed description taken in conjunction with the accompanying drawings, in which:

FIG. 1 is a perspective view schematically showing a multilayer electronic component according to an exemplary embodiment or another exemplary embodiment of the present disclosure;

FIG. 2 is a cross-sectional view of the multilayer electronic component taken along line I-I' in FIG. 1 according to an exemplary embodiment of the present disclosure;

FIG. 3 is a cross-sectional view of the multilayer electronic component according to another exemplary embodiment of the present disclosure taken along line I-I' in FIG. 1;

FIG. 4 is an enlarged view of region P in FIG. 3;

FIG. 5 is a cross-sectional view taken along line II-II' in FIG. 1;

FIG. 6 is an exploded perspective view showing the structure of the body according to an exemplary embodiment;

FIG. 7 is a perspective view showing the multilayer electronic component mounted on a board according to an exemplary embodiment or another exemplary embodiment of the present disclosure;

FIG. 8A is a cross-sectional view taken along line III-III' in FIG. 7 of the multilayer electronic component mounted on a board, according to an exemplary embodiment of the present disclosure;

FIG. 8B is a cross-sectional view taken along line III-III' in FIG. 7 of the multilayer electronic component mounted on the board, according to another exemplary embodiment of the present disclosure;

FIG. 9A is a schematic view showing a current conduction path of a multilayer electronic component according to a comparative example;

FIG. 9B is a schematic view showing a current conduction path of the multilayer electronic component according to an exemplary embodiment of the present disclosure;

FIG. 10 is a perspective view schematically showing a multilayer electronic component according to an exemplary embodiment;

FIG. 11 is a cross-sectional view of a multilayer electronic component in a first direction and a second direction according to an exemplary embodiment; and

FIG. 12 is a cross-sectional view of a multilayer electronic component in a first direction and a second direction according to an exemplary embodiment.

## DETAILED DESCRIPTION

Hereinafter, exemplary embodiments of the present disclosure will now be described in detail with reference to the accompanying drawings. The exemplary embodiments of the present disclosure may be modified in many different forms and the scope of the present disclosure should not be limited to the exemplary embodiments set forth herein. In addition, the exemplary embodiments of the present disclosure are provided to more fully explain the present disclosure to those skilled in the art. In the drawings, the shapes and dimensions may thus be exaggerated for clarity, and the same reference numerals are used to designate the same or like components.

Further, in the accompanying drawings, portions unrelated to the description will be omitted in order to clearly describe the present disclosure, and the size and thickness of each component shown in the drawings are arbitrarily shown for convenience of explanation. Therefore, the present disclosure is not necessarily limited to contents shown in the drawings. Furthermore, like reference numerals will be used to designate like components having similar functions throughout the drawings within the scope of the present disclosure. In addition, throughout the specification, when an element "includes" another component, it is to be understood that the element may further include a third component rather than excluding the third component, unless explicitly described to the contrary.

In the drawings, a first direction may be defined as thickness (T) direction or a direction in which first and second internal electrodes 121 and 122 are alternately disposed while having a dielectric layer interposed therebetween, a second direction may be defined as a length (L) direction, and a third direction may be defined as a width (W) direction, among the second direction and the third direction that are perpendicular to the first direction.

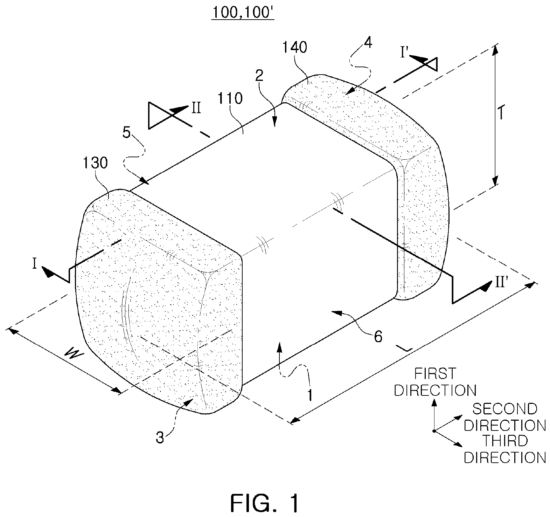

FIG. 1 is a perspective view schematically showing a multilayer electronic component according to an exemplary embodiment or another exemplary embodiment of the present disclosure.

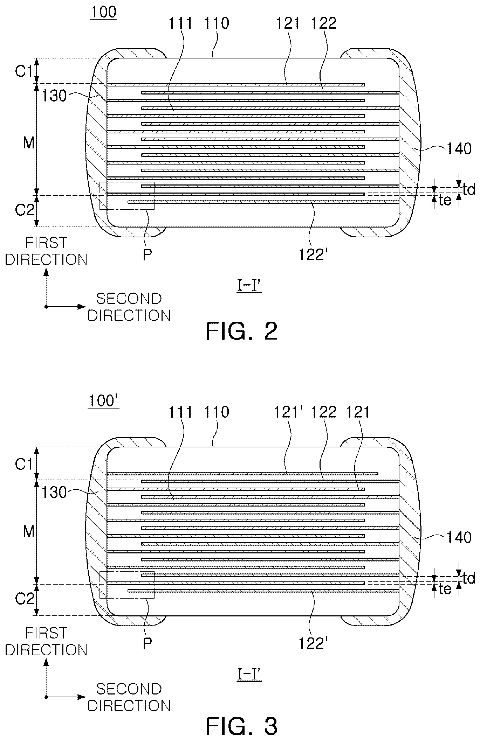

FIG. 2 is a cross-sectional view of the multilayer electronic component taken along line I-I' in FIG. 1 according to an exemplary embodiment of the present disclosure.

FIG. 3 is a cross-sectional view of the multilayer electronic component according to another exemplary embodiment of the present disclosure taken along line I-I' in FIG. 1.

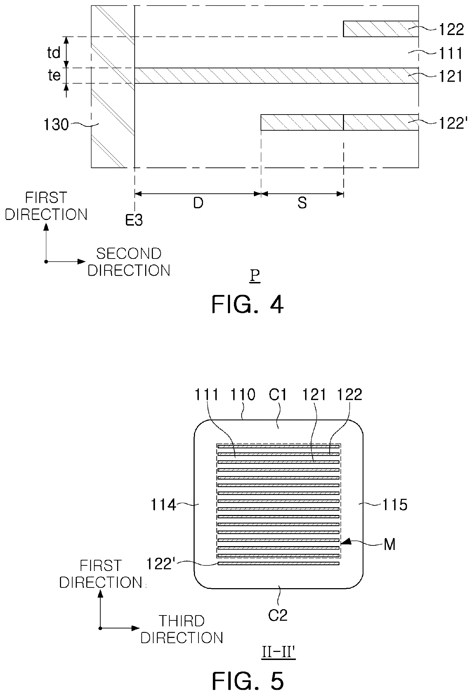

FIG. 4 is an enlarged view of region P of FIG. 3.

FIG. 5 is a cross-sectional view taken along line II-II' in FIG. 1.

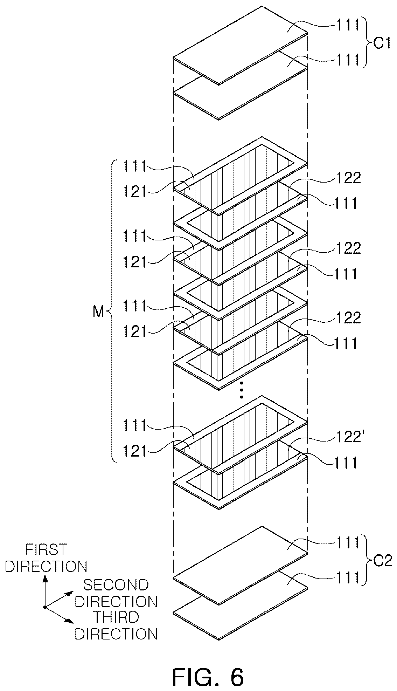

FIG. 6 is an exploded perspective view showing the structure of the body according to an exemplary embodiment.

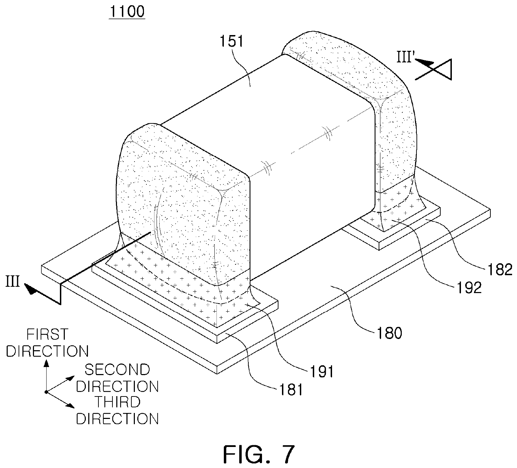

FIG. 7 is a perspective view showing the multilayer electronic component mounted on a board according to an exemplary embodiment or another exemplary embodiment of the present disclosure.

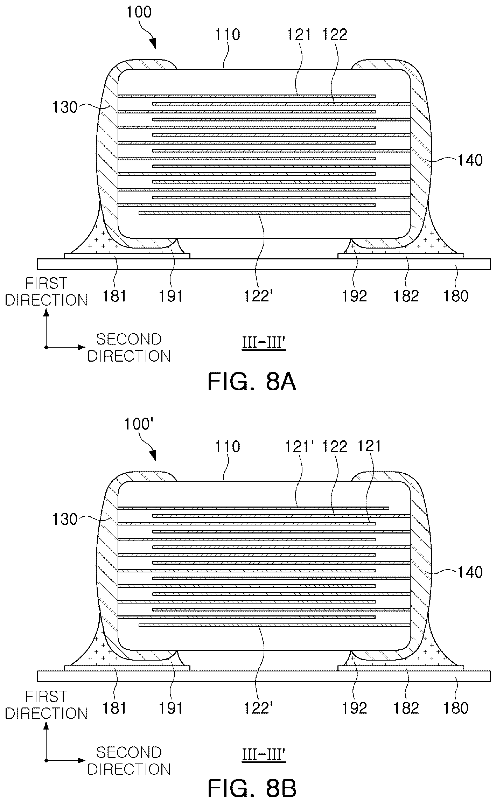

FIG. 8A is a cross-sectional view taken along line III-III' in FIG. 7 of the multilayer electronic component mounted on a board, according to an exemplary embodiment of the present disclosure.

FIG. 8B is a cross-sectional view taken along line III-III' in FIG. 7 of the multilayer electronic component mounted on the board, according to another exemplary embodiment of the present disclosure.

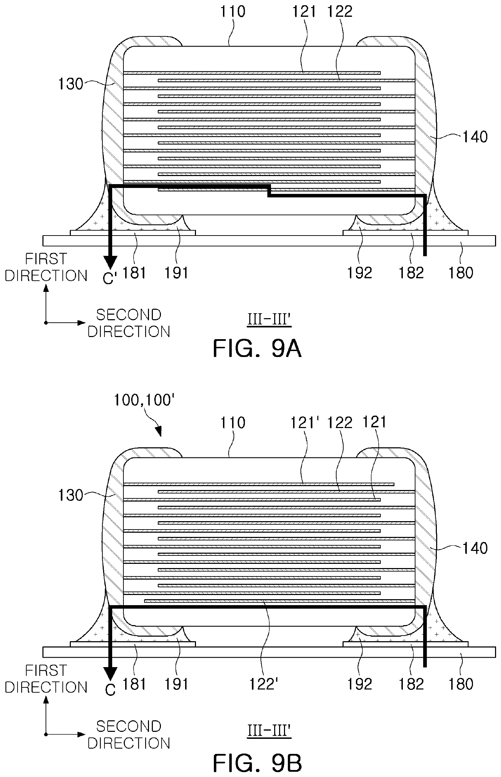

FIG. 9A is a schematic view showing a current conduction path of a multilayer electronic component according to a comparative example.

FIG. 9B is a schematic view showing a current conduction path of the multilayer electronic component according to an exemplary embodiment of the present disclosure.

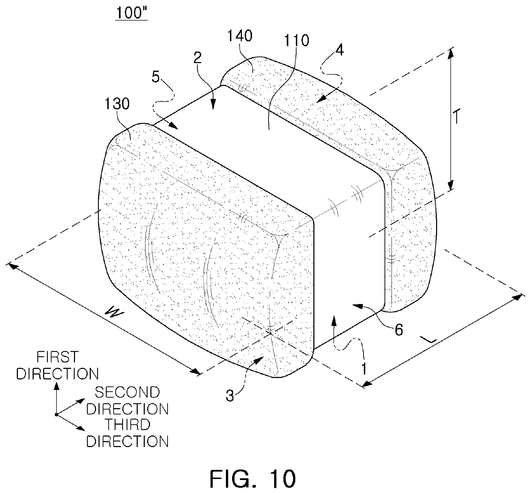

FIG. 10 is a perspective view schematically showing a multilayer electronic component according to an exemplary embodiment.

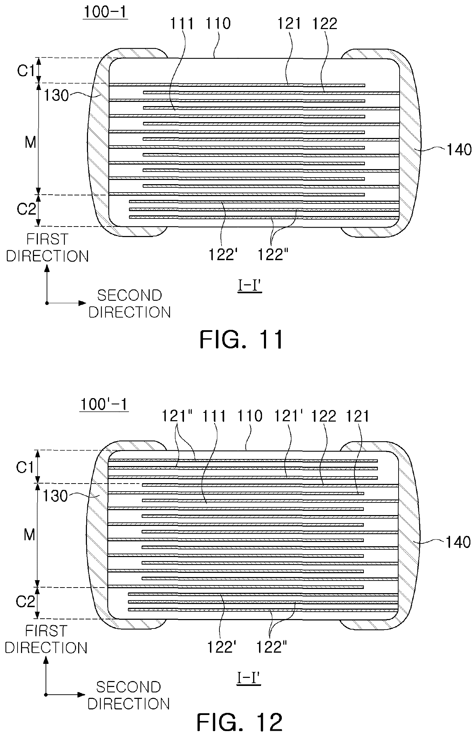

FIG. 11 is a cross-sectional view of a multilayer electronic component in a first direction and a second direction according to an exemplary embodiment.

FIG. 12 is a cross-sectional view of a multilayer electronic component in a first direction and a second direction according to an exemplary embodiment.

Hereinafter, the description describes a multilayer electronic component 100 according to an exemplary embodiment of the present disclosure, a multilayer electronic component 100' according to another exemplary embodiment, and various exemplary embodiments thereof in detail with reference to FIGS. 1 through 12.

The multilayer electronic component 100 according to an exemplary embodiment of the present disclosure may include: a body including a dielectric layer and first and second internal electrodes alternately disposed in the first direction while having the dielectric layer interposed therebetween; and first and second external electrodes disposed on opposite surfaces of the body in the second direction perpendicular to the first direction, wherein the body includes a main portion in which the first and second internal electrodes are alternately disposed in the first direction, a first cover portion disposed on one surface of the main portion in the first direction, and a second cover portion disposed on the other surface of the main portion in the first direction, one of the first and second cover portions includes a cover electrode whose average size in the second direction is larger than that of the first or second internal electrode, and the cover electrode is more adjacent to one surface or the other surface of the main portion in the first direction than to the surfaces of the body that oppose each other in the first direction.

A multilayer electronic component 100' according to another exemplary embodiment of the present disclosure may include: a body including a dielectric layer and first and second internal electrodes alternately disposed while having a dielectric layer interposed therebetween in the first direction; a first external electrode disposed on one surface of both surfaces of the body that oppose each other in the second direction perpendicular to the first direction and connected to the first internal electrode; and a second external electrode disposed on the other surface of both the surfaces of the body that oppose each other in the second direction and connected to the second internal electrode, wherein the body includes a main portion in which the first and second internal electrodes are alternately disposed in the first direction, a first cover portion disposed on one surface of the main portion in the first direction, and a second cover portion disposed on the other surface of the main portion in the first direction, the first cover portion includes a first cover electrode whose average size in the second direction is larger than the first or second internal electrode, and the second cover portion includes a second cover electrode whose average size in the second direction is larger than the first or second internal electrode.

Hereinafter, referring to FIGS. 1 through 6, the description describes in detail an exemplary embodiment commonly applied to the multilayer electronic component 100 according to an exemplary embodiment of the present disclosure and the multilayer electronic component 100' according to another exemplary embodiment.

The body 110 may include the dielectric layer 111 and the internal electrodes 121 and 122 alternately disposed in the first direction while having the dielectric layer 111 interposed therebetween. The body 110 is not particularly limited to a specific shape, and may have a hexahedral shape or a shape similar to the hexahedral shape, as shown in the drawings. The body 110 may not have a shape of the hexahedron having perfectly straight lines because a ceramic powder included in the body 110 is contracted or its edge is polished in a process of sintering the body. However, the body 110 may substantially have the hexahedral shape.

The body 110 may have first and second surfaces 1 and 2 opposing each other in the first direction, third and fourth surfaces 3 and 4 opposing each other in the second direction perpendicular to the first direction, and fifth and sixth surfaces 5 and 6 opposing each other in the third direction perpendicular to the first or second direction.

The plurality of dielectric layers 111 included in the body 110 may already be sintered, and the adjacent dielectric layers 111 may thus be integrated with each other, thus making it difficult to confirm a boundary therebetween without using a scanning electron microscope (SEM). The number of stacked dielectric layers does not need to be particularly limited, and may be determined considering a size of a ceramic electronic component. For example, the body may be formed by stacking 300 or more dielectric layers.

A raw material included in the dielectric layer 111 may be changed based on a purpose of the multilayer electronic component. In detail, the multilayer electronic component may use ferroelectric barium titanate ($BaTiO_3$) as a material for a main purpose of achieving its higher capacitance per unit volume, and use paraelectric calcium zirconate ($CaZrO_3$) as a material for a main purpose of securing its improved reliability in a high temperature environment. An example of a $BaTiO_3$-based material may be $BaTiO_3$ or $(Ba_{1-x}Ca_x)TiO_3$ $(0<x<1)$, $Ba(Ti_{1-y}Ca_y)O_3$ $(0<y<1)$, $(Ba_{1-x}Ca_x)(Ti_{1-y}Zr_y)O_3$ $(0<x<1, 0<y<1)$, or $Ba(Ti_{1-y}Zr_y)O_3$ $(0<y<1)$, in which calcium (Ca), zirconium (Zr), or the like is partially dissolved in $BaTiO_3$. An example of a $CaZrO_3$-based material may be $(Ca_{1-x}Sr_x)(Zr_{1-y}Ti_y)O_3$ $(0<x<1, 0<y<1)$.

An average thickness td of the dielectric layers 111 is not particularly limited.

The average thickness td of the dielectric layers 111 may be 0.35 um or less for the miniaturization and higher capacity of the multilayer electronic component 100, and the average thickness td of the dielectric layers 111 may be 2 um or more to improve the reliability of the multilayer electronic component 100 under high temperature and pressure. However, the average thickness td of the dielectric layers 111 according to the present disclosure will be described below.

The average thickness td of the dielectric layers 111 may indicate an average thickness of the dielectric layers 111 disposed between the first and the second internal electrodes 121 and 122.

The average thickness td of the dielectric layers 111 may be measured by scanning an image of a cross section of the body 110 in a second direction and a first direction (or the L-T cross section) by using the scanning electron microscope (SEM). Other methods and/or tools appreciated by one of ordinary skill in the art, even if not described in the present disclosure, may also be used.

For example, the average thickness td of the dielectric layers 111 may be an average value acquired by measuring their thicknesses at five equally spaced points after making, as a reference point, a point where a center line of the body in the length direction and a center line of the body in the thickness direction meet each other, and then determining the five equally spaced points including two points on the left and two points on the right, centered on this reference point, in the dielectric layers having a total of five floors including upper two floors and lower two floors, centered on the dielectric layer of one floor that is disposed at a point where the center line of the body in the length direction and the center line of the body in the thickness direction meet each other, among the dielectric layers extracted from the image of the cross section of the body 110 in the length-thickness direction (or the L-T cross section) cut from the center of the body 110 in the width direction. The image of the cross section of the body 110 may be obtained by the scanning electron microscope (SEM).

As shown in FIG. 2, the internal electrodes 121 and 122 may be alternately disposed while having the dielectric layer 111 interposed therebetween in the first direction.

The internal electrodes 121 and 122 may be classified into the first internal electrode 121 and the second internal electrode 122. The first and second internal electrodes 121 and 122 may be alternately disposed to oppose each other while having the dielectric layer 111, which is included in the body 110, interposed therebetween, and may respectively be in contact with the third and fourth surfaces 3 and 4 of the body 110 to be connected to the external electrodes 131 and 132 described below.

Referring to FIG. 2, the first internal electrode 121 may be spaced apart from the fourth surface 4 and exposed through the third surface 3, and the second internal electrode 122 may be spaced apart from the third surface 3 and exposed through the fourth surface 4.

Here, the first and second internal electrodes 121 and 122 may be electrically insulated from each other by the dielectric layer 111 interposed therebetween.

Referring to FIG. 5, the body 110 may be formed by alternately stacking a ceramic green sheet on which the first internal electrode 121 is printed and a ceramic green sheet on which the second internal electrode 122 is printed, and then sintering the same.

A material included in the internal electrode 121 or 122 is not particularly limited, and may use a material having excellent electrical conductivity. For example, the internal electrode 121 or 122 may be formed by printing, on the ceramic green sheet, a conductive paste for an internal electrode including at least one of nickel (Ni), copper (Cu), palladium (Pd), silver (Ag), gold (Au), platinum (Pt), tin (Sn), tungsten (W), titanium (Ti), and an alloy thereof.

A method of printing the conductive paste for an internal electrode may be a screen-printing method, a gravure printing method or the like, and is not limited thereto.

An average thickness te of the internal electrodes 121 or 122 is not particularly limited and may be changed based on the purpose. The average thickness te of the internal electrodes 121 or 122 may be 0.35 um or less to achieve the miniaturization of the multilayer electronic component 100, and the average thickness te of the internal electrodes 121 or 122 may be 3 um or more to improve the reliability of the multilayer electronic component 100 under the high temperature and pressure.

The average thickness te of the internal electrodes 121 or 122 may be an average value acquired by measuring their thicknesses at five equally spaced points after making, as a reference point, a point where the center line of the body in the length direction and the center line of the body in the thickness direction meet each other, and then determining the five equally spaced points including two points on the left and two points on the right, centered on this reference point, in the internal electrodes having a total of five floors including upper two floors and lower two floors, centered on the internal electrode of one floor that is disposed at a point where the center line of the body in the length direction and the center line of the body in the thickness direction meet each other, among the internal electrodes extracted from the image of the cross section of the body 110 in the length-thickness direction (or the L-T cross section) cut from the center of the body 110 in the width direction. The image of the cross section of the body 110 may be obtained by the scanning electron microscope (SEM).

The body 110 may include a main portion M which is a region where the dielectric layer 111 and the internal electrode 121 or 122 are alternately disposed in the first direction. In addition, the main portion M may be formed by repeatedly stacking the plurality of first and second internal electrodes 121 or 122 while having the dielectric layer 111 interposed therebetween.

Meanwhile, the main portion M may be classified into a capacitance formation part which is a region where the first internal electrode 121 and the second internal electrode 122 overlap each other in the first direction, and a longitudinal margin portion which is a region where the first internal electrode 121 does not overlap the second internal electrode 122 in the first direction.

Referring to FIG. 5, cover portions C1 and C2 may respectively be disposed on one surface and the other surface of the main portion M in the first direction. The cover portion may include the first cover portion C1 disposed on one surface of the main portion M in the first direction and the second cover portion C2 disposed on the other surface of the main portion M in the first direction.

The cover portion C1 or C2 may serve to prevent damage to the internal electrode that is caused by a physical or chemical stress and serve to improve a strength of the multilayer electronic component 100.

The cover portion C1 or C2 may include the same material as the dielectric layer 111 without including the first or second internal electrode 121 or 122, and may be formed by stacking one dielectric layer or two or more dielectric layers on upper and lower surfaces of the main portion M, respectively, in the thickness direction. However, a component of the cover portion is not limited to the same component as the dielectric layer 111 of the main portion M, and may include a component different from the dielectric layer 111 of the main portion M.

The cover portion C1 or C2 may include a cover electrode 121' or 122' whose average size in the second direction is larger than the first or second internal electrode without including the first or second internal electrode 121 or 122. The cover electrode 121' or 122' will be described in detail below.

An average thickness tc of the cover portions C1 or C2 is not particularly limited. In order to achieve the miniaturization and higher capacity of the multilayer electronic component, the average thickness of the cover portions C1 or C2 may be 15 um or less.

The average thickness of the cover portions C1 or C2 may indicate a size of the cover portion C1 or C2 in the first direction, and may be an average value of the sizes of the cover portions C1 or C2 in the first direction that are measured at five equally spaced points on the top or bottom of the main portion M.

Referring to FIG. 5, margin portions 114 and 115 may respectively be disposed on one surface and the other surface of the main portion M in the third direction.

The margin portions 114 and 115 may include the margin portion 114 disposed on one surface of the main portion M in the third direction and the margin portion 115 disposed on the other surface of the main portion M in the third direction. That is, the margin portions 114 and 115 may be disposed on both surfaces of the main portion in the width direction.

As shown in FIG. 3, the margin portion 114 or 115 may indicate a region between both ends of the internal electrode 121 or 122 and a boundary surface of the body 110 in a cross section of the body 110 in the length-thickness direction (or the L-T cross section) cut in a width (W) direction.

The margin portion 114 or 115 may basically serve to prevent the damage to the internal electrode that is caused by the physical or chemical stress.

The margin portion 114 or 115 may be formed by forming the internal electrode by applying a conductive paste on the ceramic green sheet except for its portion where the margin portion is to be formed.

Alternatively, in order to suppress a step caused by the internal electrode 121 or 122, the margin portion 114 or 115 may be formed by cutting the stacked internal electrodes 121 and 122 to be exposed through the fifth and sixth surfaces 5 and 6 of the body, and then stacking one dielectric layer or two or more dielectric layers on both sides of the main portion M in the width direction.

Meanwhile, a width of the margin portion 114 or 115 may not need to be particularly limited. However, an average width of the margin portions 114 or 115 may be 15 um or less in order to more easily achieve the miniaturization and higher capacitance of the multilayer electronic component.

The average width of the margin portions 114 or 115 may indicate an average size of the margin portions 114 or 115 in the third direction, and may be an average value of the sizes of the margin portions 114 or 115 in the third direction that are measured at five equally spaced points on the side of the main portion M.

Referring to FIGS. 1 through 3, the external electrodes 130 and 140 may be disposed on the body 110.

In detail, the external electrodes 130 and 140 may respectively be disposed on one surface and the other surfaces 3 and 4 of the body 110 that oppose each other in the second direction when the second direction indicates the direction perpendicular to the first direction.

Here, the external electrodes 130 and 140 may include the first external electrode 130 disposed on one surface 3 of both the surfaces of the body 110 that oppose each other in the second direction and connected to the first internal electrode 121, and the second external electrode 140 disposed on the other surface 3 of both the surfaces of the body 110 that oppose each other in the second direction and connected to the second internal electrode 121.

As shown in FIGS. 1 through 3, the external electrodes 130 and 140 may respectively be disposed on the third and fourth surfaces 3 and 4, which are one surface and the other surface of the body 110 that oppose each other in the second direction, and include the first external electrode 130 connected to the first internal electrode 121 and the second external electrode 140 connected to the second internal electrode 122.

This exemplary embodiment describes that the multilayer electronic component 100 includes two external electrodes 130 and 140. However, the number, shape or the like of the external electrode may be changed based on a shape of the internal electrode 121 or 122 or another purpose.

Meanwhile, the external electrode 130 or 140 may be made of any material having electrical conductivity such as a metal, may use its specific material determined in consideration of its electrical feature, structural stability or the like, and may have a multilayer structure.

For example, the external electrode 130 or 140 may include an electrode layer disposed on the body 110 and a plating layer formed on the electrode layer.

For a more specific example of the electrode layer, the electrode layer may be a fired electrode including the conductive metal and glass, or a resin-based electrode including the conductive metal and resin.

In addition, the electrode layer may include the fired electrode and the resin-based electrode sequentially formed on the body. In addition, the electrode layer may be formed by transferring a sheet including the conductive metal to the body or by transferring the sheet including the conductive metal to the fired electrode.

The conductive metal included in the electrode layer may use the material having the excellent electrical conductivity, and is not particularly limited. For example, the conductive metal may include at least one of nickel (Ni), copper (Cu), palladium (Pd), silver (Ag), gold (Au), platinum (Pt), tin (Sn), tungsten (W), titanium (Ti) and an alloy thereof.

The plating layer may include at least one of nickel (Ni), tin (Sn), palladium (Pd) and an alloy thereof, or may include a plurality of layers.

For a more specific example of the plating layer, the plating layer may be a nickel (Ni) plating layer or a tin (Sn) plating layer, may have the nickel (Ni) plating layer and the tin (Sn) plating layer, sequentially formed on the electrode layer, or the tin (Sn) plating layer, the nickel (Ni) plating layer, and the tin (Sn) plating layer, sequentially formed on the electrode layer. In addition, the plating layer may include the plurality of Ni plating layers or the plurality of Sn plating layers.

The size of the multilayer electronic component 100 or 100' may not need to be particularly limited.

The multilayer electronic component 100 or 100' may have a size 0201 (i.e., length × width of 0.2 mm × 0.1 mm) or less in order to simultaneously achieve its miniaturization and higher capacity. In a case of a product where its reliability in the high temperature and pressure environment is important, the multilayer electronic component 100 may have a size 3225 (i.e., length × width of 3.2 mm × 2.5 mm) or more, and a size of the multilayer electronic component is not limited thereto.

Here, a length of the multilayer electronic component 100 may indicate the maximum size of the multilayer electronic component 100 in the second direction, and a width of the multilayer electronic component 100 may indicate the maximum size of the multilayer electronic component in the third direction. The maximum size of the multilayer electronic component 100 in each of the second direction and third direction may be measured by the scanning electron microscope (SEM) or an optical microscope. Other methods and/or tools appreciated by one of ordinary skill in the art, even if not described in the present disclosure, may also be used.

Referring to FIG. 7 showing a mounting board 1100 on which the multilayer electronic component 100 or 100' is mounted, and FIGS. 8A and 8B showing a cross section taken along line III-III' in FIG. 7 according to an exemplary embodiment, the multilayer electronic component 100 or 100' may be joined to a substrate 180 by an electrode pad 181 or 182 and a solder 191 or 192, disposed on the substrate 180.

Referring to FIG. 8A, the cover electrode layer 122' may be most adjacent to the substrate 180, and referring to FIG. 8B, the second cover electrode layer 122' may be most adjacent to the substrate 180. The multilayer electronic component 100' according to another exemplary embodiment shown in FIG. 8B may achieve the effects of the present disclosure, which will be described below, regardless of its mounting direction.

Hereinafter, the description classifies and describes in detail the multilayer electronic component 100 according to an exemplary embodiment of the present disclosure and the multilayer electronic component 100 according to another exemplary embodiment.

Referring to FIG. 2, the body 110 of the multilayer electronic component 100 according to an exemplary embodiment of the present disclosure may include the main portion M, in which the first and the second internal electrodes 121 or 122 are alternately disposed in the first direction, the first cover portion C1 disposed on one surface of the main portion in the first direction, and the second cover portion C2 disposed the other surface of the main portion in the first direction, and one of the first cover portion and the second cover portion may include the cover electrode 122' whose average size in the second direction is larger than the first or second internal electrode.

Here, the cover electrode may be more adjacent to one surface or the other surface of the main portion in the first direction rather than the third and fourth surfaces 3 and 4 which are the surfaces of the body that oppose each other in the first direction.

Referring to FIG. 4, which is an enlarged view of region P in FIG. 2, the cover electrode 122' may extend by a certain distance S from a straight line connecting ends of the internal electrodes 122 to each other.

An inductance L of a conductor having a rectangular parallelepiped shape having a length l (mm), a width w (mm), and a thickness t (mm) may be expressed as follows:

[Equation 1]

$$L(\mu H) = 0.002l \left[ 2.303 \log \frac{2l}{w+t} + 0.5 + 0.235 \left( \frac{w+t}{l} \right) \right]$$

That is, it may be seen that the inductance L of the conductor having the rectangular parallelepiped shape may have a more rapid change based on its length change than its width or thickness change.

Therefore, a voltage having a high frequency of a resonance frequency or higher may be applied to the multilayer electronic component, a current may flow along the lowest layer in a stacking direction, in which a length of the current conduction path is shortest, and the inductance on the path may act as an impedance of the multilayer electronic component.

Accordingly, in the body 110 in an exemplary embodiment of the present disclosure, one of the first cover portion and the second cover portion may include the cover electrode 122' whose average size in the second direction may be larger than the first or second internal electrode, and the cover electrode may be more adjacent to one surface or the other surface of the main portion in the first direction than the surfaces of the body that oppose each other in the first direction to thus form a shortened current conduction path, thereby lowering an equivalent series inductance (ESL) of the multilayer electronic component.

In detail, the current may flow along a current conduction path C' shown in FIG. 9A in the comparative example where a size of the cover electrode 122' in the second direction is not larger than the average size of the internal electrodes 121 or 122 in the second direction. On the other hand, the current may flow along the current conduction path C shown in FIG. 9B in an exemplary embodiment where the size of the cover electrode 122' in the second direction is adjusted to be larger than the average size of the internal electrodes 121 or 122 in the second direction.

The current conduction path C' may include the lowest layer of the internal electrode when the voltage having the high frequency of the resonance frequency or higher is applied to the multilayer electronic component according to the comparative example. However, the current conduction path C' may not pass through the entire lowest layer, and have some sections where the path passes through the lowest layer of the internal electrode, and some sections where the path passes through the internal electrode of an upper layer adjacent thereto.

On the other hand, the current conduction path C may be a path passing through the entire cover electrode when the voltage having the high frequency of the resonance frequency or higher is applied to the multilayer electronic component according to an exemplary embodiment. Therefore, the multilayer electronic component according to an exemplary embodiment may have the current conduction path shorter than the multilayer electronic component according to the comparative example, thereby lowering the ESL of the multilayer electronic component.

Meanwhile, a material included in the cover electrode 122' is not particularly limited, and may include the same conductive metal as the internal electrode 121 or 122, and the cover electrode 122' may be formed using the same method as the method of forming the internal electrode 121 or 122.

Meanwhile, in an exemplary embodiment, the cover electrode 122' may be connected to only one of the first and second external electrodes 130 and 140. Accordingly, it is possible to effectively shorten the current conduction path of the multilayer electronic component 100.

Meanwhile, the plurality of internal electrodes 121 or 122 may be provided, and the sizes of the internal electrodes 121 and 122 in the second direction may be substantially the same as each other. In detail, a size difference between the plurality of internal electrodes 121 and 122 in the second direction may be 10% or less, and a size difference between the plurality of internal electrodes 121 and 122 in the second direction may be 5% or less.

Meanwhile, the size of the cover electrode 122' in the second direction may be appropriately adjusted in order to effectively form the shortened current conduction path described above. Referring to FIG. 4, D indicates a separation distance between the cover electrode 122' and the external electrode 130 in the second direction, and td indicates the average thickness of the dielectric layers. When D < td, dielectric breakdown may occur at a voltage lower than a withstand voltage of the dielectric layer 111 interposed between the internal electrodes 121 and 122. When D ≥ 2×td, the current conduction path may be insignificantly shortened than in the multilayer electronic component according to the comparative example. Therefore, in an exemplary embodiment, the size of the cover electrode 122' in the second direction may be adjusted to satisfy td ≤ D < 2×td, thus preventing a lower withstand voltage while simultaneously lowering the ESL of the multilayer electronic component 100.

Meanwhile, the ESL may be insufficiently lowered when the average thickness of the cover electrodes 122' is smaller than the average thickness te of the internal electrodes. Therefore, in an exemplary embodiment, the average thickness of the cover electrodes 122' may be the average thickness or more of the internal electrodes 121 or 122. Meanwhile, an upper limit value of the average thickness of the cover electrodes 122' is not particularly limited, and may be changed based on a required feature of the multilayer electronic component 100.

Meanwhile, the lower ESL that may be acquired when the body 110 includes the cover electrode 122', as in an exemplary embodiment of the present disclosure, may be improved as the dielectric layer 111 is thicker. In detail, the average thickness td of the dielectric layers 111 may be 2 pm or more, thus further lowering the ESL of the multilayer electronic component according to the present disclosure. An upper limit value of the average thickness td of the dielectric layers 111 is not particularly limited, and may be changed based on a size of the multilayer electronic component 100.

Meanwhile, the lower ESL that may be acquired when the body includes the cover electrode 122', as in an exemplary embodiment of the present disclosure, may be more significantly improved in a case where the multilayer electronic component 100 has a reverse geometry capacitor structure. In detail, as shown in FIG. 10, the current conduction path may be significantly shortened when the maximum size of a multilayer electronic component 100'' in the third direction (W) is larger than its maximum size in the second direction (L).

Meanwhile, the lower ESL that may be acquired when the body includes the cover electrode 122', as in an exemplary embodiment of the present disclosure, may be more significantly improved in a case where the multilayer electronic component 100 has a smaller size. In detail, it is possible to further improve an effect of shortening the current conduction path when the multilayer electronic component 100 has a size 1005 or less. Here, the size 1005 may indicate a case where length $\times$ width = 1.0 mm $\times$ 0.5 mm, and the maximum size in the second direction (L) $\times$ the maximum size in the third direction (W) = 1.0 mm $\times$ 0.5 mm.

Referring to FIG. 3, the body 110 of the multilayer electronic component 100' according to another exemplary embodiment of the present disclosure may include the first and second internal electrodes 121 and 122, and the external electrodes 130 and 140 disposed on the body may include the first external electrode 130 connected to the first internal electrode 121 and the second external electrode connected to the second internal electrode 122.

Here, the body 110 may include the main portion M, in which the first and the second internal electrodes are alternately disposed in the first direction, and the first cover portion C1 disposed on one surface of the main portion in the first direction and the second cover portion C2 disposed on the other surface of the main portion in the first direction, and the first cover portion may include the first cover electrode 121' whose average size in the second direction is larger than the first or second internal electrode, and the second cover portion may include the second cover electrode 122' whose size in the second direction is larger than the first or second internal electrode. Accordingly, it is possible to form the shortened current conduction path, thereby not only lowering the ESL of the multilayer electronic component, but also lowering the ESL regardless of the mounting direction of the multilayer electronic component.

Meanwhile, in an exemplary embodiment, the first cover electrode 121' may be connected to the first external electrode 130 and spaced apart from the second external electrode 140, and the second cover electrode 122' may be connected to the second external electrode 140 and spaced apart from the first external electrode 130. Accordingly, it is possible to effectively shorten the current conduction path of the multilayer electronic component 100'.

Referring to FIG. 4, which is an enlarged view of region P in FIG. 3, the second cover electrode 122' may extend by the certain distance S from the straight line connecting the ends of the second internal electrodes 122 to each other. FIG. 3 shows the second cover electrode 122'. However, the first cover electrode 121' may also extend by the certain distance from the straight line connecting the ends of the first internal electrodes 121 to each other.

Meanwhile, the plurality of first internal electrodes 121 and the plurality of second internal electrodes 122 may respectively be provided, and the plurality of first internal electrodes 121 and the plurality of second internal electrodes 122 may respectively have substantially the same size in the second direction. In detail, each size difference between the plurality of first internal electrodes 121 and the plurality of second internal electrodes 122 in the second direction may be 10% or less, and each size difference between the plurality of first internal electrodes 121 and the plurality of second internal electrodes 122 in the second direction may be 5% or less.

Meanwhile, the size of the second cover electrode 122' in the second direction may be appropriately adjusted in order to effectively form the shortened current conduction path described above. Referring to FIG. 4, D indicates the separation distance between the second cover electrode 122' and the first external electrode 130 in the second direction, and td indicates the average thickness of the dielectric layers. When D < td, the dielectric breakdown may occur at the voltage lower than the withstand voltage of the dielectric layer 111 interposed between the internal electrodes 121 and 122. When D $\geq$ 2$\times$td, the current conduction path may be insignificantly shortened than in the multilayer electronic component according to the comparative example. Therefore, in an exemplary embodiment, the size of the cover electrode 122' in the second direction may be adjusted to satisfy td $\leq$ D < 2$\times$td, thus preventing the lower withstand voltage while simultneously lowering the ESL of the multilayer electronic component 100'.

The separation distance, D, may be measured by scanning an image of a cross section of the body 110 in a length-thickness direction (or the L-T cross section) by using the scanning electron microscope (SEM). Other methods and/or tools appreciated by one of ordinary skill in the art, even if not described in the present disclosure, may also be used.

Meanwhile, the ESL may be insufficiently lowered when the average thickness of the second cover electrodes 122' is smaller than the average thickness te of the internal electrodes. Therefore, in an exemplary embodiment, the average thickness of the first cover electrodes 121' or the second cover electrodes 122' may be the average thickness or more of the first or second internal electrodes 121 or 122. Meanwhile, an upper limit value of the average thickness of the first or second cover electrodes 121' or 122' is not particularly limited, and may be changed based on a required feature of the multilayer electronic component 100'.

Meanwhile, the lower ESL that may be acquired when the body 110 includes the first cover electrode 121' and the second cover electrode 122', as in an exemplary embodiment of the present disclosure, may be improved as the dielectric layer 111 is thicker. In detail, the average thickness td of the dielectric layers 111 may be 2 um or more, thus further lowering the ESL of the multilayer electronic component according to the present disclosure. An upper limit value of the average thickness td of the dielectric layers 111 is not particularly limited, and may be changed based on a size of the multilayer electronic component 100'.

Meanwhile, the lower ESL that may be acquired when the body includes the first cover electrode 121' and the second cover electrode 122', as in an exemplary embodiment of the present disclosure, may be more significantly improved in the case where the multilayer electronic component 100' has the reverse geometry capacitor structure. In detail, as shown in FIG. 10, the current conduction path may be significantly shortened when the maximum size of the multilayer electronic component 100'' in the third direction (W) is larger than its maximum size in the second direction (L).

Meanwhile, the lower ESL that may be acquired when the body includes the first cover electrode 121' and the second cover electrode 122', as in an exemplary embodiment of the present disclosure, may be more significantly improved in a case where the multilayer electronic component 100' has a smaller size. In detail, it is possible to further improve the effect of shortening the current conduction path when the multilayer electronic component 100' has the size 1005 or less. Here, the size 1005 may indicate a case where length × width = 1.0 mm × 0.5 mm, and the maximum size in the second direction (L) × the maximum size in the third direction (W) = 1.0 mm × 0.5 mm.

Meanwhile, an example of a method of measuring the size of the first or second cover electrode 121' or 122' in the second direction, the average size of the internal electrodes 121 or 122 in the second direction, and the thickness of the first or second cover electrode 121' or 122' may be a method of measuring a cross section of the body 110 in the length-thickness direction (L-T), cut from the center of the body 110 in the width direction in the image scanned using the scanning electron microscope (SEM). Other methods and/or tools appreciated by one of ordinary skill in the art, even if not described in the present disclosure, may also be used.

In detail, in the case of the first or second cover electrode 121' or 122', a size of a region where the cover electrode 121' or 122' is formed in the second direction may be measured in the above-mentioned cross section, and in the case of the internal electrode 121 or 122, its average size in the second direction may be an average value acquired by measuring their sizes at five equally spaced points after making, as a reference point, a point where the center line of the body in the length direction and the center line of the body in the thickness direction meet each other, and then determining the five equally spaced points including two upper points and two lower points, centered on this reference point.

Meanwhile, the average thickness of the first or second cover electrodes 121' or 122' may be measured in the same way as the average thickness of the internal electrodes 121 or 122.

FIG. 11 is a cross-sectional view of a multilayer electronic component 100-1 in the first direction and the second direction according to an exemplary embodiment.

Referring to FIG. 11, one of the first cover portion C1 and the second cover portion C2 including the cover electrode 122' of the multilayer electronic component 100-1 according to an exemplary embodiment may further include one or more additional cover electrodes 122'' disposed outside the cover electrode 122' in the first direction. The additional cover electrode 122" may be disposed outside the cover portion C2, which includes the cover electrode 122', in the first direction than the cover electrode to thus serve to improve the strength and moisture resistance reliability of the multilayer electronic component 100-1.

Here, in an exemplary embodiment, the cover electrode may be connected to only one of the first and second external electrodes, and the additional cover electrode may only be connected to the external electrode that is the same as the external electrode to which the cover electrode is connected.

FIG. 11 shows the second additional cover electrode 122'' disposed outward in the first direction than the second cover electrode 122' when the second cover portion C2 includes the second cover electrode 122'. However, the first cover portion C1 may further include a first additional cover electrode 121' ' disposed outward in the first direction than the first cover electrode 121' when the first cover portion C1 includes the first cover electrode 121'.

One or more additional cover electrodes 122" may be provided. As the number of the additional cover electrodes 122' ' is increased, the strength and moisture resistance reliability of the multilayer electronic component 100-1 may be further improved.

An upper limit of the number of the additional cover electrodes 122'' may not need to be particularly limited, and the upper limit of the number of the additional cover electrodes 122'' may be determined based on the thickness or design specification of the cover portion C2.

FIG. 12 is a cross-sectional view of a multilayer electronic component 100'-1 in the first direction and the second direction according to an exemplary embodiment.

Referring to FIG. 12, the first cover portion C1 of the multilayer electronic component 100'-1 according to an exemplary embodiment may include the first additional cover electrode 121'' disposed outward in the first direction than the first cover electrode 121', and the second cover portion C2 may further include the second additional cover electrode 122" disposed outward in the first direction than the second cover electrode 122'. The first and second additional cover electrodes 121" and 122" may respectively be disposed outward in the first direction than the first cover electrode 121' and the second cover electrode 122' to thus serve to improve the strength and moisture resistance reliability of the multilayer electronic component 100'-1.

Here, in an exemplary embodiment, the cover electrode may be connected to only one of the first and second external electrodes, and the additional cover electrode may only be connected to the external electrode that is the same as the external electrode to which the cover electrode is connected.

One or more first and second additional cover electrodes 121'' and 122'' may be provided. As the number of the first or second additional cover electrodes 121'' or 122'' is increased, the strength and moisture resistance reliability of the multilayer electronic component 100'-1 may be further improved.

An upper limit of the number of the first or second additional cover electrodes 121'' or 122'' may not need to be particularly limited, and the upper limit of the number of the first or second additional cover electrodes 121'' or 122'' may be determined based on the thickness or design specification of the first or second cover portion C1 or C2.

(Example)

Table 1 shows a result of calculating the effect of shortening the current conduction path based on the size of the multilayer electronic component 100 by assuming the average thickness of the dielectric layers is 5 um.

To determine whether the current conduction path is to be shortened, each path shortening ratio in two cases is calculated by comparing the case of following the path along the second direction in the comparative example shown in FIG. 9A with the case of following the path along the second direction shown in FIG. 9B.

[Table 1]

| Size | 3225 | 2012 | 1608 | 1005 | 0603 | 0402 |
|---|---|---|---|---|---|---|
| Average thickness ($\mu$m) of dielectric layers | 5 | 5 | 5 | 5 | 5 | 5 |
| Maximum size ($\mu$m) in second direction | 3200 | 2000 | 1600 | 1000 | 600 | 400 |
| Path ($\mu$m) according to comparative example | 3210 | 2010 | 1610 | 1010 | 610 | 410 |
| Path ($\mu$m) according to exemplary embodiment | 3200 | 2000 | 1600 | 1000 | 600 | 400 |
| Path shortening efficiency | 0.31% | 0.50% | 0.62% | 0.99% | 1.640 | 2.44% |

Referring to Table 1, it may be seen that the smaller the size of the multilayer electronic component and the smaller the maximum size in the second direction (L), the greater the path shortening efficiency.

Accordingly, the effect of shortening the current conduction path that may be achieved by introducing the cover electrode 121' or 122' may be further improved when adjusting the maximum size of the multilayer electronic component 100 or 100' in third direction (W) to be larger than its maximum size in the second direction (L).

As set forth above, according to the exemplary embodiments of the present disclosure, the multilayer electronic component may secure the lower ESL and impedance by having the current conduction path shortened by extending the length of the internal electrode, which is adjacent to the mounting surface, to be longer than the length of the other internal electrodes.

While the exemplary embodiments have been shown and described above, it will be apparent to those skilled in the art that modifications and variations could be made without departing from the scope of the present disclosure as defined by the appended claims.

**Claims**

1.   A multilayer electronic component comprising:

a body including a dielectric layer and first and second internal electrodes alternately disposed in a first direction while having the dielectric layer interposed therebetween; and
first and second external electrodes disposed on opposite surfaces of the body in a second direction perpendicular to the first direction,
wherein the body includes:

a main portion in which the first and second internal electrodes are alternately disposed in the first direction,
a first cover portion disposed on a first surface of the main portion in the first direction, and
a second cover portion disposed on a second surface of the main portion in the first direction,
the first and second surfaces oppose each other in the first direction,
the first cover portion includes a first cover electrode, a size of the first cover electrode in the second direction is larger than an average size of the first or second internal electrode in the second direction, and
the first cover electrode is closer to the first surface of the main portion than to the surfaces of the body that oppose each other in the first direction.

2. The component according to claim 1, wherein the first cover portion, further includes one or more first additional cover electrodes disposed further away from a center of the body in the first direction than the first cover electrode.

3. The component according to claim 2, wherein the first cover electrode is connected to only one of the first and second external electrodes, and
the first additional cover electrode is connected to only the same external electrode as the cover electrode.

4. The component according to claim 1, comprising a plurality of first internal electrodes and a plurality of second internal electrodes, and
a size difference between the first and second internal electrodes in the second direction is 10% or less.

5. The component according to claim 1, wherein $td \leq D < 2 \times td$ where D indicates a separation distance between the first cover electrode and one of the first and second external electrodes further from the cover electrode in the second direction, and td indicates an average thickness of the dielectric layer.

6. The component according to claim 1, wherein an average thickness of the first cover electrode is the same as or more than an average thickness of the first and second internal electrodes.

7. The component according to claim 1, wherein a maximum size of the multilayer electronic component in a third direction is greater than a maximum size of the multilayer electronic component in the second direction, and the third direction indicates a direction perpendicular to the first and second direction.

8. The component according to claim 1, wherein the multilayer electronic component has a size 1005 or less.

9. The component according to claim 1, wherein the second cover portion do not include the first cover electrode.

10. The component according to claim 1, wherein the second cover portion includes a second cover electrode, a size of the second cover electrode in the second direction is larger than the average size of the first or second internal electrode in the second direction.

11. The component according to claim 10, wherein the second cover portion further includes one or more second additional cover electrodes disposed further away from a center of the body in the first direction than the second cover electrode.

12. The component according to claim 11, wherein the first cover electrode and the first additional cover electrode are connected to the first external electrode and spaced apart from the second external electrode, and
the second cover electrode and the second additional cover electrode are connected to the second external electrode and spaced apart from the first external electrode.

13. The component according to claim 10, wherein $td \leq D < 2 \times td$ where D indicates a separation distance between the second cover electrode and one of the first and second external electrodes further from the cover electrode in the second direction, and td indicates an average thickness of the dielectric layer.

14. The component according to claim 10, wherein an average thickness of the first or second cover electrodes is the same as or more than an average thickness of the first and second internal electrodes.

100,100'

FIRST
DIRECTION

SECOND
DIRECTION
THIRD
DIRECTION

FIG. 1

FIG. 2

FIG. 3

td

te

130

122

111

121

122'

FIRST
DIRECTION

E3

SECOND
DIRECTION

D

S

P

FIG. 4

111 110 C1 121 122

114

122'

115

M

FIRST
DIRECTION

THIRD
DIRECTION

C2

II–II'

FIG. 5

FIG. 6

1100

151

III'

182

192

180

191

181

III

FIRST
DIRECTION

SECOND
DIRECTION
THIRD
DIRECTION

FIG. 7

100

110    121  122

130

140

FIRST
DIRECTION    181    191         122'         192   182   180

SECOND
DIRECTION         III–III'

FIG. 8A

100'

110    121' 122  121

130

140

FIRST
DIRECTION    181    191         122'         192   182   180

SECOND
DIRECTION         III–III'

FIG. 8B

110    121  122

130

140

FIRST
DIRECTION    C' 181  191                    192  182  180

SECOND
DIRECTION                    III–III'

FIG. 9A

100,100'

110        121' 122  121

130

140

FIRST
DIRECTION    C  181  191        122'        192  182  180

SECOND
DIRECTION                    III–III'

FIG. 9B

FIG. 10

100-1

111 110 121 122

C1

130

M

140

C2

FIRST
DIRECTION

122' 122"

I-I'

SECOND
DIRECTION

FIG. 11

100'-1

121" 111 110 121' 122 121

C1

130

M

140

C2

FIRST
DIRECTION

122' 122"

I-I'

SECOND
DIRECTION

FIG. 12

**EP 4 542 602 A2**

## REFERENCES CITED IN THE DESCRIPTION

### Patent documents cited in the description

- KR 1020230140707